# EUROPEAN PATENT SPECIFICATION

(11) **EP 3 282 141 B1**
(45) Date of publication and mention of the grant of the patent: **02.09.2020**
(21) Application number: 17185388.0
(22) Date of filing: 08.08.2017
(51) Int. Cl.: F16D 1/116

(54) **SELF-ALIGNING DRIVESHAFT COUPLER**
SELBSTAUSRICHTENDER ANTRIEBSWELLENKOPPLER
COUPLEUR D'ARBRE À AUTO-ALIGNEMENT

(30) Priority: 12.08.2016 US 201615235866
(43) Date of publication of application: 14.02.2018
(73) Proprietor: Deere & Company, Moline, IL 61265 (US)
(72) Inventor: Knuth, Thomas, 68163 Mannheim (DE)
(74) Representative: Reichert, Christian

(56) References cited:
- DE-A1- 3 141 353
- US-A- 2 885 232
- US-A- 5 472 073

## Description

This invention relates generally to coupler devices between tractor power take offs and agricultural implements, and specifically to quick connect couplers for coupling power take offs to driveshafts of rear mounted implements.

Tractors may be equipped with a power take off (PTO) that transmits rotary power from an engine to an implement. The most common location for the PTO shaft is at the rear of the tractor, but some tractors have auxiliary PTO shafts at other locations. The direction of rotation, rotational speed, approximate location and exact dimensions of the PTO shaft are standardized to provide ability to interchange between power shafts on various implements made by different manufacturers. PTO shafts typically rotate at 540 rpm, 1000 rpm, 2100 rpm, or more than one speed.

To engage the PTO to the shaft or drive line of a rear mounted implement, the PTO may have the ability to telescope. After the tractor is in proper position, the tractor operator may manually extend the telescoping PTO and employ various coupler devices to couple the PTO to the implement power shaft. This requires getting down off the seat or operator station of the tractor, and it can be quite time consuming to couple the power take off to the implement manually. Coupling a tractor PTO to the driveline of an implement also can be difficult and dirty.

In the past, PTOs have been coupled to implement drivelines using splines to transmit rotational power, along with an additional keeper to secure the coupled parts and resist thrust loads. Often it is difficult to find the correct alignment for the female spline of the drive line and the male spline of the tractor PTO. Sometimes it is necessary for the operator to turn the implement drive line until the correct alignment is found.

After correct alignment is accomplished, the operator still must hold back a driveline locking feature until the implement shaft or driveline is in place. It may be difficult to manipulate the lock back feature or turn the implement driveline to obtain correct alignment between the PTO and the implement shaft.

US 2 885 232 A shows a coupling for a rotatable shaft. It comprises a shaft with a spline which is received inside a coupling yoke. The yoke has an additional spline on its outside surface. A collar is movably attached to the outside surface of the yoke, preloaded by a spring and held in place by a pin. Between the shaft and the yoke an adapter is provided which meshes with the splines of the shaft and has a recess for a locking pin.

A need exists for an improved apparatus and method for coupling a PTO on a tractor to the shaft or driveline of an implement. There is a need for greater operator safety and ease of use when hooking up a tractor PTO to the shaft of an implement. There is a need for a self-aligning driveshaft coupler that may be used with standard PTO driveshafts on tractors, and with standard shafts or drivelines on a variety of different implements. There also is a need for a self-aligning driveshaft coupler that does not require any external energy source such as electricity, hydraulics or pneumatics.

A self-aligning driveshaft coupler is proposed according of claim 1.

The receiving clutch has a retaining groove around its outer surface, and the locking clutch assembly has a pivotable locking pin with a projection that enters the retaining groove when the locking clutch assembly slides onto the receiving clutch. A collar has a plurality of drive pins that enter the receiving holes after rotating the receiving clutch less than 180 degrees to rotatably engage the locking clutch assembly to the receiving clutch.

The self-aligning driveshaft coupler provides greater operator safety and ease of use when hooking up a tractor PTO to the shaft of an implement. It may be used with standard PTO driveshafts on tractors, and with standard shafts or drivelines on a variety of different implements. The self-aligning driveshaft coupler also does not require any external energy source such as electricity, hydraulics or pneumatics.
Fig. 1 to Fig. 5 show a basic background and are not part of the invention.
Fig. 1 is a perspective view of a small and/or compact tractor with a self-aligning driveshaft coupler.
Fig. 2 is a perspective view of a self-aligning driveshaft coupler before connection.
Fig. 3 is a perspective view, partially in section, of a self-aligning driveshaft coupler during initial connection.
Fig. 4 is a perspective view of a self-aligning driveshaft coupler during later connection.
Fig. 5 is a perspective view, partially in section, of a self-aligning driveshaft coupler after connection.
Fig. 6 is an exploded perspective view of a self-aligning driveshaft coupler before connection according to the invention.
Fig. 7 is a perspective view of a self-aligning driveshaft coupler during connection, according to the invention.

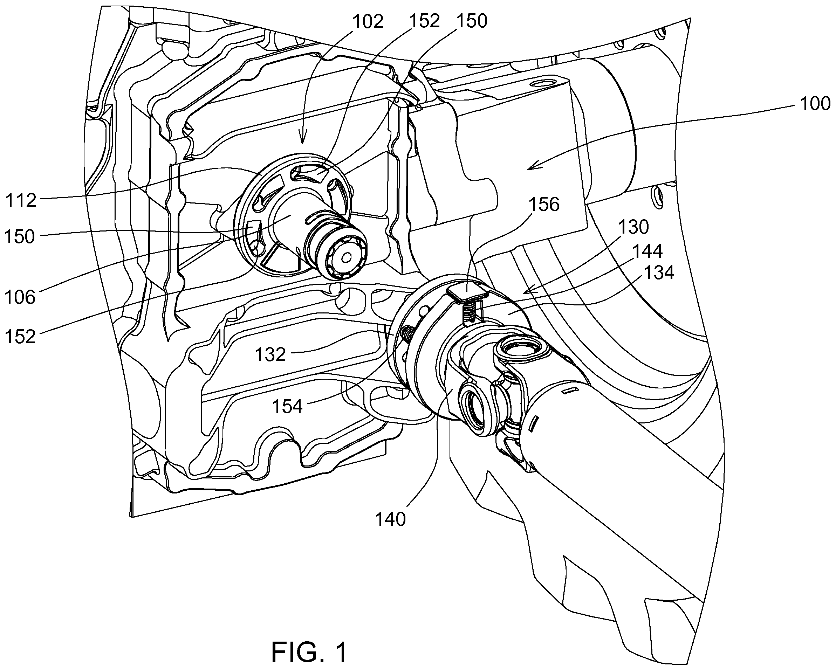

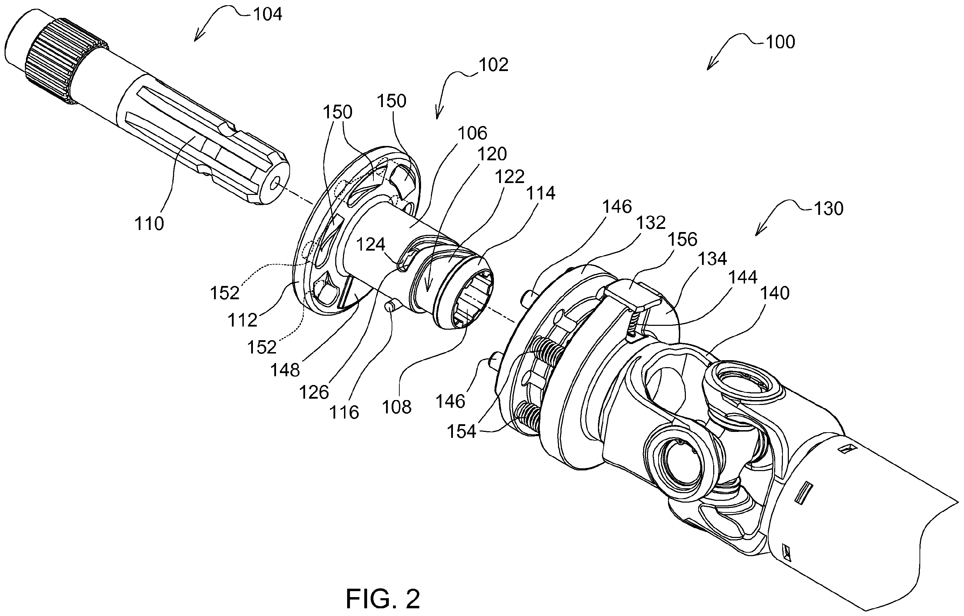

As shown in an example embodiment in Figs. 1-5, self-aligning driveshaft coupler 100 may be used to connect a tractor PTO to a driveline or shaft of a rear mounted implement. The self-aligning driveshaft coupler may include receiving clutch 102 installed and mounted to tractor PTO output shaft 104. The receiving clutch may include neck 106 with internal splines 108 that fit around and engage the external splines 110 on a standard tractor PTO output shaft. The neck may be integral with base or flange 112. The outer end 114 of the neck may have a sloped lip that does not extend beyond the end of the tractor PTO output shaft. The receiving clutch may be secured to the tractor PTO output shaft using pin 116 inserted through radial hole 118 in the neck and a corresponding hole in the tractor PTO output shaft. Other similar devices may be used to secure the receiving clutch axially to the tractor PTO output shaft.

In one example embodiment, the self-aligning driveshaft coupler may include a spiral channel 120 extending up to or about 360 degrees around the outer circumferential surface of neck 106. The spiral channel may have a wide first end 122 near the outer end 114 of the neck, and may spiral around the neck's outer circumference toward base or flange 112. The spiral channel may taper down to a narrower second end 124, and may terminate between the outer end 114 and base or flange 112. At or near the second end of the spiral channel, a radial slot 126 may be dimensioned to receive locking pin 128.

In one example embodiment, the self-aligning driveshaft coupler may include locking clutch assembly 130 on an implement, including a first ring shaped member 132 and a second ring shaped member 134. The first and second ring shaped members may be slidably engaged together with internal splines or teeth 136 and external splines or teeth 138 for rotation together, and also may be retained axially together by retainer ring 158. The second ring shaped member may be secured to the implement driveline, shown here as welded together or cast to form an integral part along with universal joint 140.

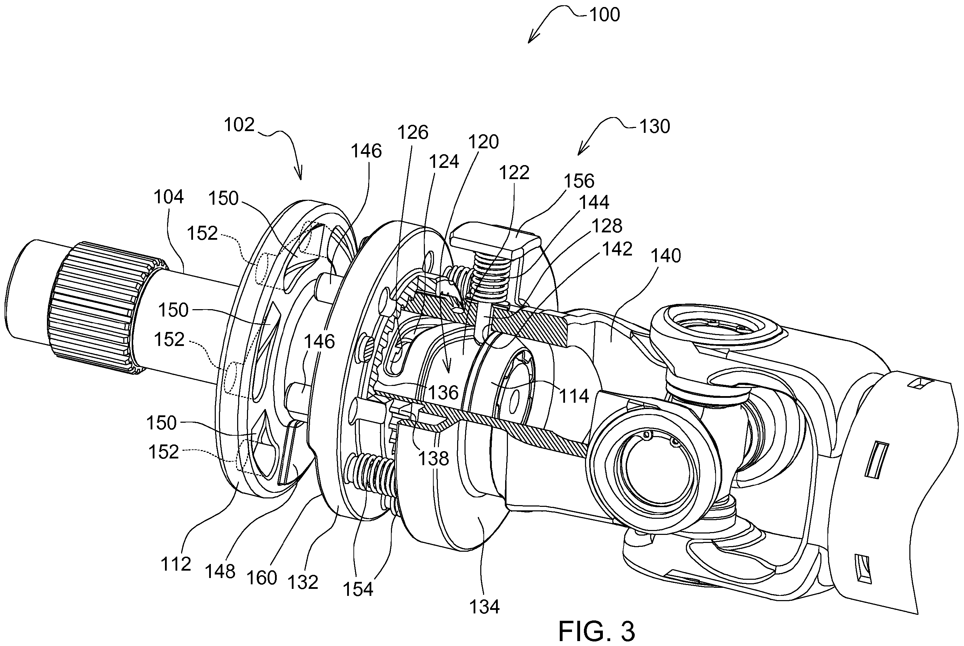

In one example embodiment, the self-aligning driveshaft coupler may include locking pin 128 slidably mounted in radial hole 142 in the second ring shaped member 134. The operator may start connecting the self-aligning driveshaft coupler by picking up the locking clutch assembly 130 and sliding it axially onto receiving clutch 102. The operator may move the locking clutch assembly far enough to slide locking pin 128 over the sloped lip at the outer end 114 of neck 106 and into the first wide end 122 of spiral channel 120, as shown in Fig. 3. Or the operator may retract locking pin 128 using release button or lever 156, until the locking pin reaches spiral channel 120. Spring 144 may be mounted around the locking pin and may urge the locking pin radially into the first wide end of the channel. The operator then may operate the tractor to rotate PTO output shaft 104. As the PTO output shaft rotates up to about 360 degrees or one complete revolution, spiral channel 120 pulls locking pin 128, and locking assembly 130, further onto receiving clutch 102.

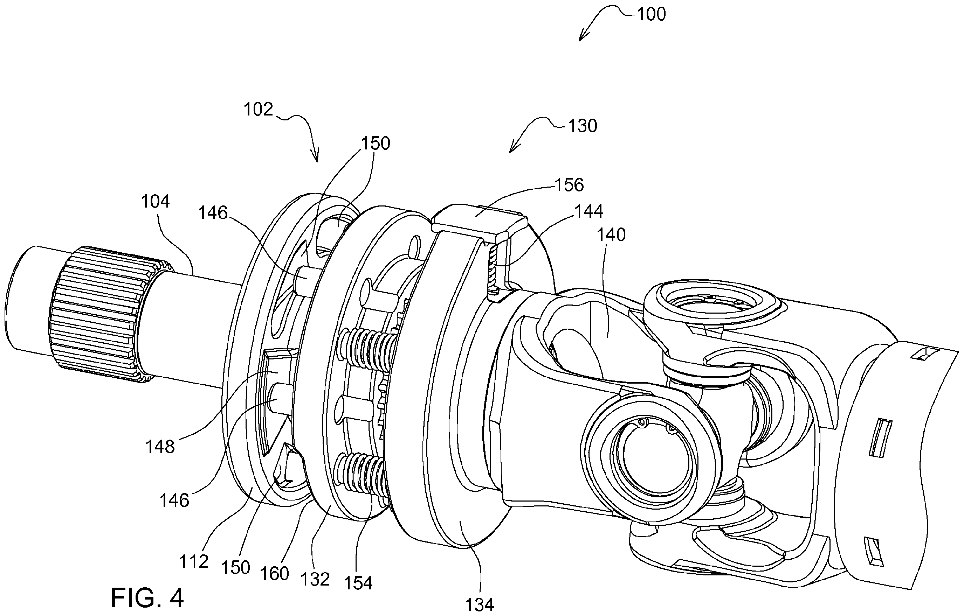

In one example embodiment, the self-aligning driveshaft coupler may include a plurality of drive pins 146 that project axially from first ring shaped member 132 toward receiving clutch 102. For example, the first ring shaped member may have five drive pins. As shown in Fig. 3, while locking pin 128 is in the first wide end of the spiral channel, the drive pins may be spaced from the base or flange 112 of the receiving clutch. As the tractor PTO output shaft rotates, the channel pulls the locking pin and the locking clutch assembly further onto the receiving clutch. The first and second ring shaped members advance axially toward the receiving clutch. For part of a rotation (for example, about 60 degrees), the first ring shaped member may stop advancing axially until drive pins 146 reach and contact base or flange 112. Optionally, as shown in Fig. 4, one of drive pins 146 may contact a raised portion 148 on the base or flange, while the other drive pins may remain spaced from the base or flange.

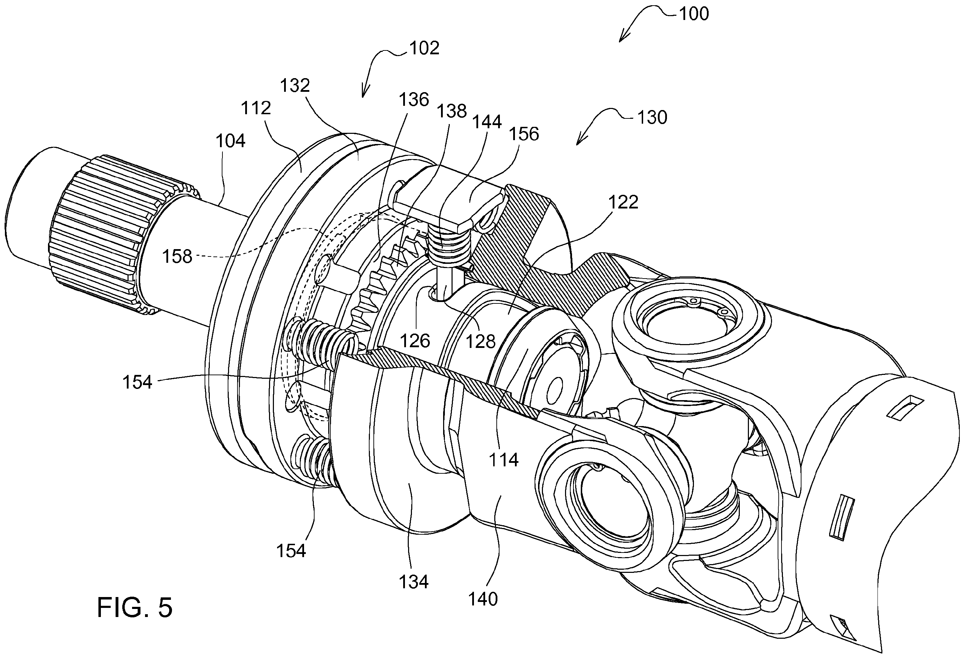

In one example embodiment, the self-aligning driveshaft coupler may include a plurality of ramps 150 with a receiving hole 152 at the bottom end of each ramp. As the tractor PTO output shaft continues rotating the first ring shaped member again advances axially so that all of the drive pins 146 may contact the base or flange 112 adjacent the start of each ramp 150. Each ramp may be less than about 60 degrees around the base or flange. Springs 154 may be positioned between the first ring shaped member and the second ring shaped member. As shown in Fig. 5, the springs may urge the first ring shaped member axially toward the receiving member, and drive pins 146 down the ramps into receiving holes 152. Optionally, the first ring shaped member may have a mating surface 160 where raised portion 148 may fit.

In one example embodiment, the self-aligning driveshaft coupler may include locking pin 128 that may enter radial slot 126 at or nearly the same time as drive pins 146 enter receiving holes 152. Spring 144 may urge the locking pin into radial slot 126. To disconnect the self-aligning driveshaft coupler, the operator may use driveshaft release button 156, or a release lever, to pull the locking pin out from the radial slot. Once the locking pin is released, the locking clutch assembly may slide axially off the receiving clutch.

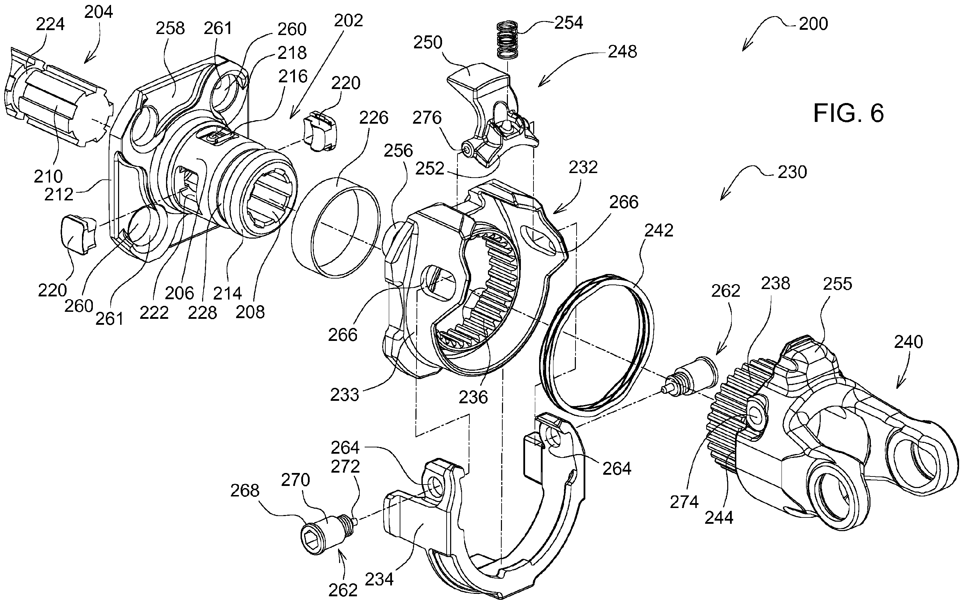

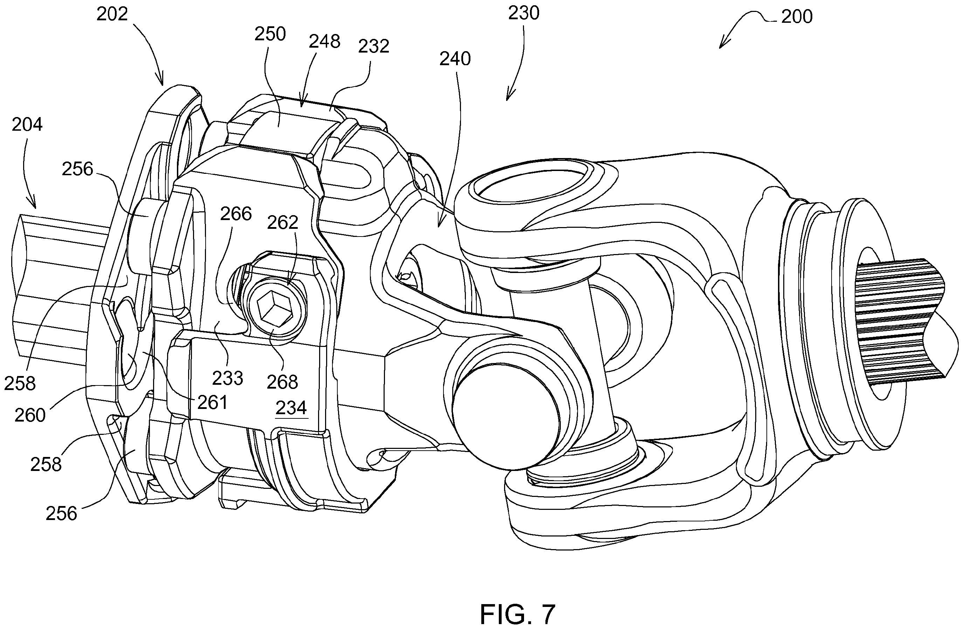

In the embodiment shown in Figs. 6-7, self-aligning driveshaft coupler 200 may include receiving clutch 202 installed and mounted to tractor PTO output shaft 204. The receiving clutch may include neck 206 with internal splines 208 that fit around and engage the external splines 210 on a standard tractor PTO output shaft. The neck may be integral with base or flange 212. The outer end 214 of the neck may have a sloped lip that does not extend beyond the end of the tractor PTO output shaft. The receiving clutch may be secured to the tractor PTO output shaft using at least one retainer 220. The retainers may be inserted into slots 222 in the neck and may engage recess 224 on the tractor PTO output shaft. Additionally, retaining ring 226 may slide over the neck to hold the retainers in place. Retaining spring 216 may be held in by rivet 218 to restrain the retaining ring. Other similar devices may be used to secure the receiving clutch to the tractor PTO output shaft such as a clamping device. Alternatively, receiving clutch 202 may be an integral part of the output shaft on the tractor without any retaining device such as retainer 220 and/or retaining ring 226.

In the embodiment, the self-aligning driveshaft coupler may include locking clutch assembly 230 on an implement. The locking clutch assembly may include collar 232 with protective sleeve 233 and drive pins 256, and grip 234 that an operator may hold to position locking clutch assembly 230 onto receiving clutch 202. The collar may have internal splines 236 on its internal circumferential surface that slidably engage external splines 238 on yoke 240 for rotation together. The yoke may be attached to the implement using a cross bearing or CV joint.

In the embodiment, the self-aligning driveshaft coupler may include locking pin 248 pivotably mounted to yoke 240. The operator may connect the self-aligning driveshaft coupler by sliding locking clutch assembly 230 onto receiving clutch 202. Locking pin 248 pivots when it reaches the sloped lip at the outer end 214 of neck 206, and locking projection 252 moves into retaining groove 228. Retaining groove 228 may extend around the outer circumferential surface of neck 106 adjacent outer end 214. Spring 254 may be mounted between locking pin 248 and cap 255 on yoke 240. Spring 254 may urge locking pin 248 to pivot so locking pin projection 252 enters and remains in retaining groove 228. Alternatively, the reaction force of the locking pin 248 may retain the locking clutch assembly 230 onto receiving clutch 202. The locking pin also may include driveshaft release button or lever 250 that an operator may press to pivot the locking pin sufficiently to compress spring 254 and move locking pin projection 252 out from retaining groove 228.

In the embodiment, the self-aligning driveshaft coupler may include a plurality of drive pins 256 that project axially from collar 232 toward receiving clutch 202. For example, the collar may have four drive pins. The base or flange of the receiving clutch may include a plurality of recesses 258 with a receiving hole 260 at one end of recess. When the locking pin is in the retaining groove, the operator may rotate the PTO output shaft and locking clutch assembly, so that each drive pin 256 slides around and extends into one of the recesses due to spring 242. If the collar has four drive pins, the PTO output shaft and locking clutch assembly may be rotated less than 90 degrees, because each recess is 90 degrees around the base or flange. Similarly, three drive pins would require rotating the PTO output shaft and locking clutch assembly less than 120 degrees, or two drive pins would require rotating it 180 degrees. Stop 261 at an end of each recess 258 may stop the relative motion of the receiver 202 and locking clutch assembly 230. Spring 242, positioned between collar 232 and step 244 on yoke 240, may be compressed until the locking pin projection is in the retaining groove. Spring 242 then may extend to urge drive pins 256 against the recesses 258 and engage receiving holes 260 at the ends of the recesses. Spring 242 may include one or more springs, or may be a single spherical wave spring as shown in Figs. 6-7.

In the embodiment, the locking clutch assembly of the self-aligning driveshaft coupler may include grip 234. Grip 234 may be a generally C-shaped member that extends at least partially around the protective sleeve 233 on the outer surface of collar 232. Retaining pins 262 may attach grip 234 and collar 232 to yoke 240, and enable the collar to slide axially as drive pins 256 enter and engage receiving holes 260. Retaining pins 262 also may pivotably mount locking pin 248 to the yoke. For example, each retaining pin 262 may have a head 268 and a first portion 270 inserted through hole 264 in grip 234, through slot 266 in collar 232, and into threaded hole 274 in yoke 240. Additionally, each retaining pin 262 may have a second portion 272 with a smaller diameter that may be inserted into hole 276 in the side of locking pin 248.

Having described a preferred embodiment, it will become apparent that various modifications can be made without departing from the scope of the invention as defined in the accompanying claims. For example, the self-aligning driveshaft coupler may be used on mid-mount or front-mount PTOs or other agricultural equipment.

## Claims

1. A self-aligning driveshaft coupler (100), comprising:
an output shaft;
a receiving clutch (102) mounted to the output shaft (104) and having a neck (106) with a retaining groove;
a locking clutch assembly (130) mountable to an implement and having a collar (132) and a yoke (134) that rotate together, and a spring (154) between the collar (132) and the yoke (134);
**characterized by** a locking pin (128) inwardly extending and pivotably attached to the yoke (134) to move a projection on the locking pin (128) in and out of the retaining groove;
and by a plurality of drive pins (146) extending axially from the collar (132),
the spring (154) biasing the drive pins (146) into engagement with the receiving clutch (102) when the locking pin (128) projection is in the retaining groove and the output shaft (104) and receiving clutch (102) are rotated.

2. The self-aligning driveshaft coupler (100) of claim 1,
further comprising a C-shaped grip (234) mounted around the outer surface of the collar (132); the collar (132) being slideable axially with respect to the grip (234).

3. The self-aligning driveshaft coupler (100) of claim 1,
wherein the receiving clutch (102) has a plurality of recesses (150) corresponding to the plurality of drive pins (146), and
a hole at an end of each recess (150) for engaging one of the drive pins (146).

4. The self-aligning driveshaft coupler (100) of claim 1,
further comprising a spring (144) urging the locking pin (128) to pivot to move the projection into the retaining groove.

5. The self-aligning driveshaft coupler (100) of claim 1,
further comprising a release button (156) on the locking pin (128) to pivot the locking pin (128) and move the projection out of the retaining groove.

6. A self-aligning driveshaft coupler (100) of claim 1, where:
the receiving clutch (102) has a neck (106) with an outer surface, the retaining groove around the outer surface, and a base with a plurality of receiving holes; and
the plurality of drive pins (146) enter the receiving holes after rotating the receiving clutch (102) to rotatably engage the locking clutch assembly (130) to the receiving clutch (102).

7. The self-aligning driveshaft coupler (100) of claim 6,
further comprising a plurality of recesses (150) on the base for each of the receiving holes.

8. The self-aligning driveshaft coupler (100) of claim 6,
further comprising at least one retaining pin extending through a slot in the collar (132) and providing a pivot axis for the pivotable locking pin (128).

9. A self-aligning driveshaft coupler (100) according to claim 1, where
the pivotable locking pin (128) enters before a plurality of the axially extending drive pins (146) on the locking clutch assembly (130) enter a plurality of receiving holes in the receiving clutch (102).

10. The self-aligning driveshaft coupler (100) of claim 9,
wherein the axially extending drive pins (146) extend from a collar (132) that is slideable relative to the locking clutch assembly (130).

## Patentansprüche

1. Selbstausrichtender Antriebswellenkoppler (100), umfassend:
eine Ausgangswelle;
eine Aufnahmekupplung (102), die an der Ausgangswelle (104) angebracht ist und einen Hals (106) mit einer Haltenut aufweist;
eine Verriegelungskupplungsanordnung (130), die an einem Gerät angebracht werden kann und einen Bund (132) und ein Joch (134), die sich zusammen drehen, und eine Feder (154) zwischen dem Bund (132) und dem Joch (134) aufweist;
**gekennzeichnet durch**
einen Verriegelungsstift (128), der sich nach innen erstreckt und schwenkbar an dem Joch (134) befestigt ist, um einen Vorsprung an dem Verriegelungsstift (128) in die und aus der Haltenut zu bewegen;
und mehrere Mitnehmerstifte (146), die sich axial von dem Bund (132) erstrecken,
wobei die Feder (154) die Mitnehmerstifte (146) in Eingriff mit der Aufnahmekupplung (102) vorspannt, wenn sich der Vorsprung des Verriegelungsstifts (128) in der Haltenut befindet und die Ausgangswelle (104) und die Aufnahmekupplung (102) gedreht werden.

2. Selbstausrichtender Antriebswellenkoppler (100) nach Anspruch 1,
ferner umfassend einen C-förmigen Griff (234), der um die Außenfläche des Bunds (132) herum angebracht ist; wobei der Bund (132) bezüglich des Griffs (234) axial verschiebbar ist.

3. Selbstausrichtender Antriebswellenkoppler (100) nach Anspruch 1,
wobei die Aufnahmekupplung (102) mehrere Aussparungen (150), die den mehreren Mitnehmerstiften (146) entsprechen, und
ein Loch an einem Ende jeder Aussparung (150) zur Ineingriffnahme der Mitnehmerstifte (146) aufweist.

4. Selbstausrichtender Antriebswellenkoppler (100) nach Anspruch 1,
ferner umfassend eine Feder (144), die den Verriegelungsstift (128) zum Schwenken zwecks Bewegens des Vorsprungs in die Haltenut drückt.

5. Selbstausrichtender Antriebswellenkoppler (100) nach Anspruch 1,
ferner umfassend eine Freigabetaste (156) am Verriegelungsstift (128) zum Schwenken des Verriegelungsstifts (128) und Bewegen des Vorsprungs aus der Haltenut.

6. Selbstausrichtender Antriebswellenkoppler (100) nach Anspruch 1, wobei:
die Aufnahmekupplung (102) einen Hals (106) mit einer Außenfläche, die Haltenut um die Außenfläche und eine Basis mit mehreren Aufnahmelöchern aufweist; und
die mehreren Mitnehmerstifte (146) nach Drehen der Aufnahmekupplung (102) in die Aufnahmelöcher eintreten, um die verriegelungskupplungsanordnung (130) mit der Aufnahmekupplung (102) drehbar in Eingriff zu bringen.

7. Selbstausrichtender Antriebswellenkoppler (100) nach Anspruch 6,
ferner umfassend mehrere Aussparungen (150) an der Basis für jedes der Aufnahmelöcher.

8. Selbstausrichtender Antriebswellenkoppler (100) nach Anspruch 6,
ferner umfassend mindestens einen Haltestift, der sich durch einen Schlitz im Bund (132) erstreckt und eine Schwenkachse für den schwenkbaren Verriegelungsstift (128) bereitstellt.

9. Selbstausrichtender Antriebswellenkoppler (100) nach Anspruch 1, wobei
der schwenkbare Verriegelungsstift (128) vor mehreren der sich axial erstreckenden Mitnehmerstifte (146) an der Verriegelungskupplungsanordnung (130) in mehrere Aufnahmelöcher in der Aufnahmekupplung (102) eintritt.

10. Selbstausrichtender Antriebswellenkoppler (100) nach Anspruch 9,
wobei sich die sich axial erstreckenden Mitnehmerstifte (146) von einem Bund (132) erstrecken, der bezüglich der Verriegelungskupplungsanordnung (130) verschiebbar ist.

## Revendications

1. Coupleur d'arbre à auto-alignement (100), comprenant :
un arbre de sortie ;
un embrayage de réception (102) monté sur l'arbre de sortie (104) et ayant un col (106) avec une gorge de retenue ;
un ensemble d'embrayage de verrouillage (130) pouvant être monté sur un composant et ayant un collier (132) et un étrier (134) qui tournent l'un avec l'autre, et un ressort (154) entre le collier (132) et l'étrier (134) ;
**caractérisé par**
une broche de verrouillage (128) s'étendant vers l'intérieur et attachée de manière pivotante à l'étrier (134) de manière à déplacer une partie saillante sur la broche de verrouillage (128) dans et hors de la gorge de retenue ;
et par une pluralité de broches d'entraînement (146) s'étendant axialement depuis le collier (132), le ressort (154) sollicitant les broches d'entraînement (146) en prise avec l'embrayage de réception (102) lorsque la partie saillante de la broche de verrouillage (128) est dans la gorge de retenue et que l'arbre de sortie (104) et l'embrayage de réception (102) sont tournés.

2. Coupleur d'arbre à auto-alignement (100) selon la revendication 1,
comprenant en outre une prise en forme de C (234) montée autour de la surface extérieure du collier (132) ; le collier (132) pouvant coulisser axialement par rapport à la prise (234).

3. Coupleur d'arbre à auto-alignement (100) selon la revendication 1,
dans lequel l'embrayage de réception (102) a une pluralité de renfoncements (150) correspondant à la pluralité de broches d'entraînement (146), et un trou à une extrémité de chaque renfoncement (150) pour venir en prise avec l'une des broches d'entraînement (146).

4. Coupleur d'arbre à auto-alignement (100) selon la revendication 1,
comprenant en outre un ressort (144) poussant la broche de verrouillage (128) de manière à ce qu'elle pivote pour déplacer la partie saillante dans la gorge de retenue.

5. Coupleur d'arbre à auto-alignement (100) selon la revendication 1,
comprenant en outre un bouton de libération (156) sur la broche de verrouillage (128) pour faire pivoter la broche de verrouillage (128) et déplacer la partie saillante hors de la gorge de retenue.

6. Coupleur d'arbre à auto-alignement (100) selon la revendication 1, dans lequel :
l'embrayage de réception (102) présente un col (106) avec une surface extérieure, la gorge de retenue autour de la surface extérieure, et une base avec une pluralité de trous de réception ; et
la pluralité de broches d'entraînement (146) pénètrent dans les trous de réception après la rotation de l'embrayage de réception (102) de manière à mettre en prise de manière rotative l'ensemble d'embrayage de verrouillage (130) avec l'embrayage de réception (102).

7. Coupleur d'arbre à auto-alignement (100) selon la revendication 6,
comprenant en outre une pluralité de renfoncements (150) sur la base pour chacun des trous de réception.

8. Coupleur d'arbre à auto-alignement (100) selon la revendication 6,
comprenant en outre au moins une broche de retenue s'étendant à travers une fente dans le collier (132) et fournissant un axe de pivotement pour la broche de verrouillage pivotante (128).

9. Coupleur d'arbre à auto-alignement (100) selon la revendication 1, dans lequel
la broche de verrouillage pivotante (128) pénètre avant qu'une pluralité des broches d'entraînement s'étendant axialement (146) sur l'ensemble d'embrayage de verrouillage (130) ne pénètrent dans une pluralité de trous de réception dans l'embrayage de réception (102).

10. Coupleur d'arbre à auto-alignement (100) selon la revendication 9,
dans lequel les broches d'entraînement s'étendant axialement (146) s'étendent depuis un collier (132) qui peut coulisser par rapport à l'ensemble d'embrayage de verrouillage (130).
